Europäisches Patentamt

European Patent Office

Office européen des brevets

(19)

(11) **EP 0 991 234 A1**

(12) ## DEMANDE DE BREVET EUROPEEN

(43) Date de publication:
**05.04.2000 Bulletin 2000/14**

(51) Int Cl.7: **H04L 27/12**, H04L 27/156

(21) Numéro de dépôt: **99410121.0**

(22) Date de dépôt: **04.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **02.10.1998 FR 9812527**

(71) Demandeur: **Faure Research SARL**
**38028 Grenoble Cédex 1 (FR)**

(72) Inventeurs:
• **Faure, Jean-Philippe**
**38000 Grenoble (FR)**
• **Faure, Edith**
**38000 Grenoble (FR)**

(54) **Démodulateur numérique de signaux MDF**

(57) Démodulateur numérique comportant :

- deux horloges (1A, 1B) de demi période fixe égale à ∆T, déphasées de la durée ∆T ÷ 2,
- des moyens (2A, 2B) de compter, à réception de chaque front montant ou descendant du signal logique modulé :

  un premier nombre de fois où la première horloge (1A) a changé d'état entre la réception des deux derniers fronts du signal logique modulé, un deuxième nombre de fois où la deuxième horloge (1B) a changé d'état entre la réception des deux derniers fronts du signal logique modulé,

- des moyens (3) de test d'égalité desdits nombres comptés,
- et des moyens (4) de mise à jour, à la réception de chaque front montant ou descendant du signal logique modulé, des signaux de sortie à la valeur dudit premier ou dudit deuxième nombre lorsque ces deux nombres sont égaux, et de maintien des signaux de sortie à la même valeur jusqu'à la prochaine mise à jour.

Figure 1

EP 0 991 234 A1

## Description

### Domaine technique de l'invention :

La présente invention concerne un procédé de démodulation d'un signal modulé par déplacement de fréquence.

### Etat de la technique :

Les dispositifs de démodulation analogiques fonctionnant par boucle à verrouillage de phase, par déphasage ou encore par discriminateur, nécessitent un grand nombre de périodes du signal entrant pour permettre aux systèmes de se caler et de démoduler. Il en résulte une perte de temps importante à chaque changement de fréquence, et donc une faible performance en terme de débit. De tels dispositifs son décrits dans les documents FR-A-2738421, FR-A-2728118 et WO 9413084.

La démodulation numérique utilise usuellement la mesure du temps écoulé entre deux passages à zéro du signal modulé reçu et la compare avec le temps moyen ou théorique entre deux passages à zéro de l'onde porteuse (voir documents EP-A-564426, FR-A-2679724 et EP-A-762628). La mesure du temps est réalisée à l'aide de compteurs pilotés par une horloge d'échantillonnage. La précision de la mesure nécessite le sur-échantillonnage du signal reçu à l'aide d'une horloge de fréquence très supérieure, usuellement mille fois supérieure, à la fréquence de l'onde porteuse des signaux modulés. La fréquence d'échantillonnage est d'autant plus élevée que la fréquence de l'onde porteuse est élevée.

Lorsque la fréquence porteuse des signaux modulés est élevée, les systèmes numériques, étant limité en fréquence d'échantillonnage par la technologie des composants, ne peuvent pas démoduler directement les signaux mais abaissent la fréquence porteuse à une fréquence intermédiaire de plus faible valeur. Aussi, démoduler le signal sur une demi période de la fréquence intermédiaire revient à démoduler ce signal sur un grand nombre de périodes de la fréquence porteuse. Il y a donc perte de vitesse de transmission de l'information lorsque la fréquence porteuse est élevée.

Lorsque la fréquence porteuse est suffisamment faible pour que les signaux soient directement démodulés par les systèmes numériques classiques, la précision de la mesure impose un écart minimum important entre les différentes fréquences associées aux différentes valeurs binaire à restituer. Cet écart limite le nombre de fréquences utilisables dans un canal de transmission donné ou impose une largeur minimum importante au canal de transmission nécessaire à la transmission du débit binaire souhaité. Dans ce cas, il y a perte de rendement du débit binaire restitué par rapport à la largueur du canal nécessaire.

### Objet de l'invention

Un premier objet de l'invention consiste à élaborer un procédé de démodulation numérique éliminant la mesure exacte de la fréquence du signal reçu et ainsi réduisant le sur-échantillonnage des signaux reçus à la valeur minimum de deux. Ceci permet la démodulation de fréquences supérieures et ou plus proches que les démodulations classiques.

Un deuxième objet de l'invention consiste à élaborer un procédé de démodulation numérique démodulant sur une demi période ou une période de signal reçu des fréquences supérieures aux démodulations classiques. Ceci permet de supprimer la fréquence intermédiaire des démodulations classiques ou augmenter sa valeur afin d'augmenter le débit binaire restitué.

Un troisième objet de l'invention consiste à élaborer un procédé de démodulation numérique démodulant sur une demi période ou une période de signal reçu des fréquences plus proches que les démodulations classiques. Ceci permet d'utiliser plus de fréquences dans les canaux de transmission classiques ou de subdiviser les canaux de transmission classiques en sous-canaux utilisant le même nombre de fréquence. Il en résulte, dans les deux cas, une augmentation du débit binaire restitué.

Un quatrième objet de l'invention consiste à réaliser un dispositif de démodulation totalement numérique, de conception simple et de coût réduit, notamment pour une réalisation par programmation dans un microprocesseur ou pour une intégration en circuit intégré.

Un cinquième objet de l'invention consiste à élaborer un procédé de démodulation qui permet de simplifier les systèmes de transmission offrant le choix du canal de transmission parmi plusieurs canaux possibles ou utilisant la transmission par étalement de spectre de fréquences.

### Exposé de l'invention

La technique de modulation par déplacement de fréquence est utilisée pour transmettre un signal numérique d'un émetteur à un récepteur en associant à chaque valeur binaire du signal numérique (0,1, ou 01,10...) une fréquence particulière. L'émetteur comporte un modulateur qui émet pour chaque valeur binaire du signal numérique sa fréquence particulière associée et le récepteur comporte un démodulateur qui restitue les valeurs binaires du signal numérique en discriminant ces dites fréquences.

Plus précisément, l'objet du procédé selon l'invention est de restituer les valeurs binaires d'un signal numérique auxquelles sont associées des fréquences dont les demi périodes sont proches de multiples distincts d'une même durée $\Delta T$.

Le procédé selon l'invention discrimine les fréquences associées aux valeurs binaires en utilisant deux horloges identiques, de demi périodes $\Delta T$, déphasées de la durée $\Delta T \div 2$.

Les différentes étapes du procédé de démodulation selon l'invention consistent successivement à :

- Compter, à réception de chaque front montant ou descendant du signal logique modulé :

    un premier nombre de fois où la première horloge a changé d'état entre la réception des deux derniers fronts du signal logique modulé, un deuxième nombre de fois où la deuxième horloge a changé d'état entre la réception des deux derniers fronts du signal logique modulé,

- Mettre à jour les signaux de sortie à la valeur dudit premier ou dudit deuxième nombre lorsque ces deux nombres sont égaux.
- et à maintenir les signaux de sortie à la même valeur jusqu'à la prochaine mise à jour.

Le procédé de l'invention restitue parfaitement les valeurs binaires d'origine.

En effet, si l'on nomme $F_0$, $F_k$...$F_{n-1}$ , $k \in \{0,..., n-1\}$ les n fréquences à discriminer, leurs demi périodes $\frac{1}{2} t_0$ , $\frac{1}{2} t_k$ ... $\frac{1}{2} t_{n-1}$ respectives peuvent s'écrire de la manière suivante :

$$\frac{1}{2} t_0 = A_0 \times \Delta T$$

$$\frac{1}{2} t_1 = A_1 \times \Delta T$$

$$.$$

$$\frac{1}{2} t_k = A_k \times \Delta T$$

$$.$$

$$\frac{1}{2} t_{n-1} = A_{n-1} \times \Delta T$$

Dans les relations précédentes, les nombres $A_k$ sont des nombres entiers,

Alors, lorsque la demi période du signal logique modulé reçu est :

- proche de $\frac{1}{2} t_0$, le procédé restitue la valeur $A_0$,
- proche de $\frac{1}{2} t_1$, le procédé restitue la valeur $A_1$,
- 
- proche de $\frac{1}{2} t_k$, le procédé restitue la valeur $A_k$,
- 
- proche de $\frac{1}{2} t_{n-1}$ , le procédé restitue la valeur $A_{n-1}$,

Ainsi, le procédé restitue les valeurs binaires distinctes correspondant aux fréquences à discriminer.

Réciproquement, lorsque le procédé met à jour les signaux de sortie à la valeur binaire $A_k$, cela signifie que la dernière demi période du signal modulé reçu a sa durée comprise entre $\frac{1}{2} t_k - (\Delta T \div 2)$ et $\frac{1}{2} t_k + (\Delta T \div 2)$.

Le procédé réduit bien le sur-échantillonnage des démodulateurs numériques classiques à la valeur minimum de deux. En effet, la plus petite demi période de signal à produire est de durée $\Delta T \div 2$ pour un écart de durée $\Delta T$ entre les demi périodes des fréquences à discriminer.

Selon un mode de réalisation préférentiel du démodulateur numérique, les moyens de compter les nombres de fois où les horloges ont changé d'état entre la réception des deux derniers fronts du signal logique modulé, comportent deux horloges connectées à deux compteurs, les valeurs desdits compteurs étant lues par un microprocesseur puis réinitialisée à chaque réception d'un front montant ou descendant du signal logique modulé. En outre, les opérations de test des valeurs comptées, et de mise à jour et de maintien des signaux de sortie sont exécutées par logiciel dans un microprocesseur.

Un cas avantageux du procédé selon l'invention est le cas où les fréquences associées aux valeurs binaires que prend le signal numérique transmis ont leurs demi périodes proches de multiples consécutifs d'une même durée $\Delta T$.

Dans ce cas, afin de simplifier la réalisation de dispositifs faisant usage du procédé, il est particulièrement avantageux de ne pas compter les nombres de fois où chaque horloge a changé d'état entre la réception des deux derniers fronts du signal logique modulé mais seulement de calculer ces nombres modulo n.

Pour cela, le procédé utilise les deux horloges identiques, de demi périodes $\Delta T$ et déphasées de la durée $\Delta T \div 2$ pour cadencer deux séquenceurs d'états qui reproduisent à l'infini de manière cyclique deux séquences identiques fixes déphasées de la durée $\Delta T \div 2$, chaque séquence étant composée de la même série de n états logiques distincts, chaque état logique ayant une durée fixe de $\Delta T$.

Les différentes étapes du procédé de démodulation consistent alors successivement à :

- capturer sur chaque front montant et descendant du signal logique modulé,

    l'état en cours du premier séquenceur d'état, l'état en cours du deuxième séquenceur d'état,

- calculer modulo n à chaque nouvelle capture :

    un premier écart en nombre d'états entre les positions respectives dans la séquence de n états du dernier état du premier séquenceur capturé et de l'avant dernier état du premier séquenceur capturé, et un deuxième écart en nombre d'états entre les positions respectives dans la séquence de n états du dernier état du deuxième séquenceur capturé et de l'avant dernier état du deuxième séquenceur capturé.

- Mettre à jour les signaux de sortie à la valeur du premier ou du deuxième écart lorsque les deux écarts sont égaux.
- et à maintenir les signaux de sortie à la même valeur jusqu'à la prochaine mise à jour.

Le procédé de l'invention selon ce cas avantageux, restitue parfaitement les valeurs binaires d'origine.

En effet, si l'on nomme comme précédemment $F_0$, $F_k...F_{n-1}$ , $k \in \{0,...,n-1\}$ les n fréquences consécutives à discriminer, leurs demi périodes ½ $t_0$ , ½ $t_k$ ... ½ $t_{n-1}$ respectives peuvent s'écrire de la manière suivante :

$$\tfrac{1}{2} t_0 = a \times \Delta T$$

$$\tfrac{1}{2} t_1 = (a + 1) \times \Delta T$$

$$.$$

$$\tfrac{1}{2} t_k = (a + k) \times \Delta T$$

$$.$$

$$\tfrac{1}{2} t_{n-1} = (a + n - 1) \times \Delta T$$

Dans les relations précédentes, a est un nombre entier, qui définit la fréquence la plus élevée à discriminer.

Alors, lorsque la demi période du signal logique modulé reçu est :

- proche de ½ $t_0$, le procédé restitue la valeur a modulo n,
- proche de ½ $t_1$, le procédé restitue la valeur (a + 1) modulo n,
- 
- proche de ½ $t_k$, le procédé restitue la valeur (a + k) modulo n,
- 
- proche de ½ $t_{n-1}$ , le procédé restitue la valeur (a + n - 1) modulo n,

Ainsi, le procédé restitue n valeurs binaires distinctes correspondant aux n fréquences à discriminer.

Réciproquement, lorsque le procédé met à jour les signaux de sortie à la valeur binaire (a + k) modulo n, cela signifie que la dernière demi période du signal modulé reçu a sa durée comprise entre ½ $t_k$ - ($\Delta T$ ÷ 2) et ½ $t_k$ + ($\Delta T$ ÷ 2).

Dans la deuxième étape du procédé, si l'on nomme $E_0$, $E_i...E_{n-1}$ , $i \in \{0,...,n-1\}$, les n états logiques consécutifs qui composent la séquence des séquenceurs d'état, le résultat du calcul modulo n de l'écart en nombre d'états entre les positions respectives dans la séquence de n états du dernier état $E_p$ capturé et de l'avant dernier état $E_q$ capturé est égale à (p - q) modulo n.

Le procédé est naturellement adapté à la définition de canaux de transmission de n fréquences consécutives chacun. En effet, on remarque que le même dispositif, fonctionne sans aucun réglage sur chacun des canaux de transmission ainsi définis. Cette qualité simplifie la réalisation de systèmes de transmission offrant le choix du canal de transmission parmi plusieurs canaux possibles ainsi que la réalisation de systèmes de transmission utilisant la transmission par étalement de spectre de fréquences.

Dans ce cas du procédé selon l'invention, Il est particulièrement avantageux de faire usage de deux compteurs cycliques pour réaliser les deux séquenceurs. Ainsi, chaque séquenceur produit la même séquence composée de la série des n valeurs consécutives 0, 1, 2, ..., (n - 1). Le calcul de l'écart en nombre d'états entre les positions respectives de deux états quelconques dans la séquence revient alors à une simple opération de soustraction des valeurs d'état modulo n.

Selon un mode de réalisation préférentiel d'un démodulateur par séquenceur d'états, les horloges comportent un oscillateur dont le signal de sortie est connecté sur une première bascule et dont le signal de sortie inversé dudit oscillateur est connecté sur une deuxième bascule, les sorties des deux bascules délivrant ainsi deux signaux logiques périodiques de demi période fixe égale à $\Delta T$ déphasés l'un par rapport à l'autre de la durée $\Delta T \div 2$. Les deux séquenceurs d'états comportent chacun au moins une bascule qui, associée à chaque horloge forme deux compteurs cycliques à n états. Les moyens de capture d'un séquenceur d'état comportent une porte neutre associée à un groupe d'au moins une bascule D pour former un premier groupe d'au moins une bascule qui change d'état sur front montant, et une porte logique inverseuse associée à un groupe d'au moins une bascule D pour former un deuxième groupe d'au moins une bascule qui change d'état sur front descendant, les deux groupes de bascules ainsi formés recevant sur leurs entrées d'horloge le signal logique modulé et sur leurs entrées de donnée les signaux du séquenceur d'états. A chaque réception de front montant ou descendant du signal modulé, un des deux groupes de bascules capture l'état du séquenceur alors que l'autre groupe garde en mémoire l'état du séquenceur capturé à la réception du front précédent du signal modulé. Le circuit de calcul modulo n de l'écart en nombre d'états entre les positions respectives dans la séquence de n états du dernier état et de l'avant dernier état capturé d'un séquenceur d'états comportent au moins un circuit soustracteur. Le circuit de test d'égalité des écarts calculés comporte un groupe d'au moins une porte logique NON OU Exclusif, les premières entrées de chaque porte logique dudit groupe étant connectées aux sorties du premier circuit de calcul et les deuxièmes entrées de chaque porte logique dudit groupe étant connectées aux sorties du deuxième circuit de calcul. Le circuit de mise à jour et de maintien des signaux de sortie comporte un groupe d'au moins un verrou logique dont les entrées de donnée reçoivent le signal logique modulé retardé par une série de portes logique neutres, et dont les entrées de verrouillage reçoivent le signal de sortie du circuit de test d'égalité des écarts calculés.

**Description sommaire des figures**

D'autres avantages et caractéristiques ressortiront plus clairement de la description qui va suivre de différents modes de réalisation de l'invention, donnés à titre d'exemples non limitatifs, et représentés aux dessins annexés, dans lesquels :

- La figure 1 représente un schéma synoptique du démodulateur numérique selon l'invention.
- La figure 2 représente un exemple de réalisation du dispositif de démodulation numérique selon l'invention en utilisant un microprocesseur.
- La figure 3 représente un schéma synoptique du démodulateur numérique par séquenceurs d'états selon l'invention.
- La figure 4 illustre un chronogramme représentatif du calcul modulo 3 par un dispositif réalisé selon l'invention pour n = 3, de l'écart en nombre d'états entre les positions respectives dans la séquence de 3 états du dernier état capturé et de l'avant dernier état capturé d'un séquenceur d'états.
- La figure 5 représente un exemple de réalisation du démodulateur numérique par séquenceurs d'états pour démoduler deux fréquences, soit n = 2.
- La figure 6 représente un exemple de réalisation, d'un sous-ensemble du démodulateur numérique par séquenceurs d'états pour démoduler quatre fréquences, soit n = 4. Le sous-ensemble représenté est composé d'une horloge, d'un séquenceur d'états, d'un circuit de capture d'état et d'un circuit de calcul de l'écart en nombre d'états entre les positions respectives dans la séquence du dernier état capturé et de l'avant demier état capturé.

**Description détaillée des modes de réalisations de l'invention**

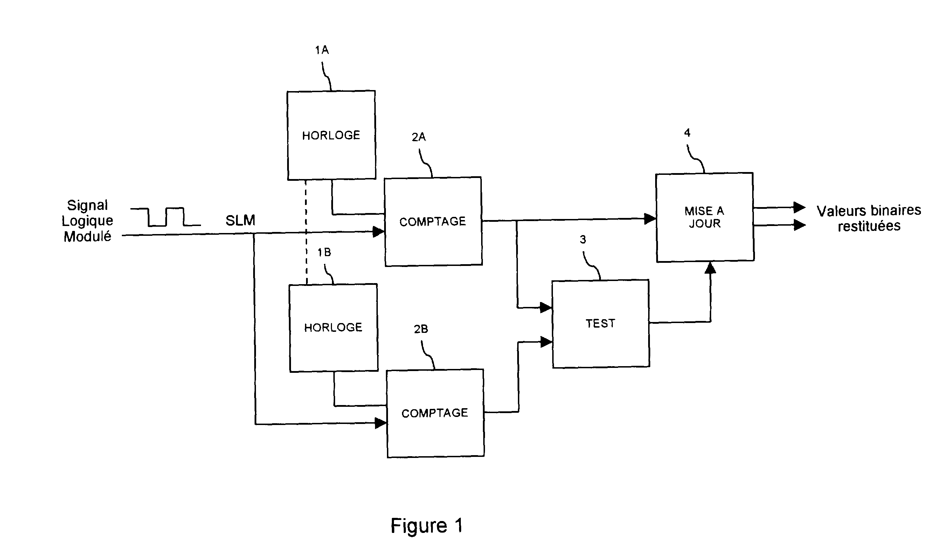

En référence à la figure 1, le démodulateur numérique comporte d'une manière générale :

- des premiers moyens comprenant deux horloges 1A et 1B de demi période fixe égale à $\Delta T$, déphasées de la durée $\Delta T \div 2$,
- des deuxièmes moyens comprenant deux circuits 2A et 2B de comptage des nombres de fois où respectivement les horloges 1A et 1B ont changé d'état entre la réception des deux derniers fronts du signal modulé,
- Des troisièmes moyens comprenant un circuit 3 de test d'égalité des nombres comptés par les circuits 2A et 2B,
- Des quatrièmes moyens 4 de mise à jour, à la réception de chaque front montant ou descendant du signal logique modulé, des signaux de sortie à un des nombres comptés par les circuits 2A ou 2B lorsque le circuit 3 a déterminé que ces deux dudits nombres sont égaux, et de maintien des signaux de sortie à la même valeur jusqu'à la prochaine mise à jour.

Le fonctionnement du dispositif de démodulation de la figure 1 est le suivant :

Les deux circuits 1A et 1B sont aptes à délivrer deux signaux logiques périodiques de demi période fixe égale à $\Delta T$ et déphasés l'un par rapport à l'autre de la durée $\Delta T \div 2$.

A chaque réception d'un front montant ou descendant du signal logique modulé, les opérations suivantes sont successivement réalisées :

- le circuit 3 test si les deux nombres de changements d'états comptés par les circuits 2A et 2B sont égaux.
- Le circuit 4 met à jour et verrouille jusqu'à la prochaine mise à jour les signaux de sortie à la valeur d'un des deux nombres comptés par les circuits 2A et 2B si le circuit 3 a déterminé que ces deux dudits nombres sont égaux.
- Les circuits 2A et 2B de comptage sont réinitialisés.

Les avantages découlant des dispositifs de la figure 1 sont les suivants :

- Le sur-échantillonnage des signaux en réception est réduit à deux. En effet, la plus petite demi période de signal à produire est de durée $\Delta T \div 2$ pour un écart de durée $\Delta T$ entre les demi périodes des fréquences à discriminer.

- La fréquence d'horloge utilisée par les dispositifs de démodulation ne dépend pas de la fréquence porteuse, mais des écarts de fréquence entre les fréquences à discriminer. Il est donc possible de démoduler sans fréquences intermédiaires des fréquences très élevées et de réduire au minimum les écarts entre les fréquences à discriminer.

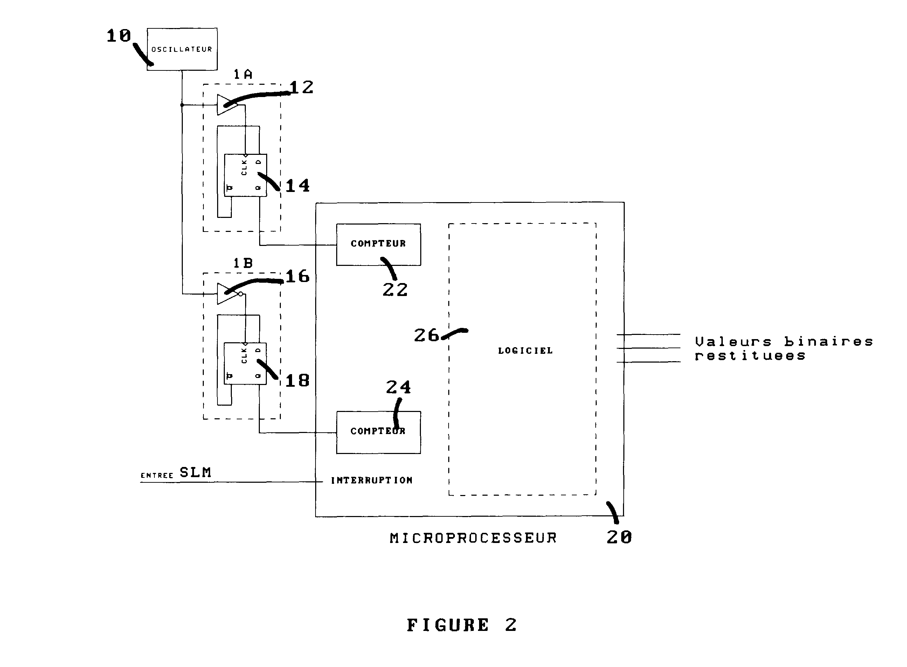

La figure 2 représente un exemple de réalisation du dispositif de démodulation numérique selon l'invention en utilisant un microprocesseur 20.
L'horloge 1A est réalisée par un oscillateur 10 à quartz de rapport cyclique 50% de demi période égale à $\Delta T \div 2$, dont la sortie est connectée à l'entrée d'une porte neutre 12 suivie d'une bascule D 14.

L'horloge 1B est réalisée par le même oscillateur 10 à quartz de rapport cyclique 50% de demi période égale à $\Delta T \div 2$, dont la sortie est connectée à l'entrée d'une porte logique inverseuse 16 suivie d'une bascule D 18.

Les sorties des deux bascules D 14 et 16 délivrent ainsi deux signaux logiques périodiques de demi période fixe égale à $\Delta T$ déphasés l'un par rapport à l'autre de la durée $\Delta T \div 2$.

Les circuits de comptages 2A et 2B sont réalisés en interne dans le microprocesseur 20 par deux compteurs 22 et 24 dont les entrées sont respectivement connectées aux sorties des bascules D 14 et 18 et par le logiciel 26 exécuté à chaque réception d'un front montant ou descendant du signal logique modulé reçu à l'entrée d'interruption du même microprocesseur 20. Les valeurs des compteurs 22 et 24 sont incrémentées à chaque changement d'état sur leurs entrées respectives et sont remises à zéro à chaque réception d'un front montant ou descendant sur l'entrée d'interruption du microprocesseur 20.

Le circuit de test 3 et le circuit de mise à jour et de maintien 4 sont réalisés par logiciel exécuté par le microprocesseur 20. A chaque réception d'un front montant ou descendant sur l'entrée d'interruption, le logiciel 26 exécute successivement les opérations suivantes :

- Il sauvegarde les deux valeurs des compteurs 22 et 24 avant de les remettre à zéro.
- si les deux valeurs sauvegardées sont égales, Il met à jour les signaux de sortie à la première valeur sauvegardée.

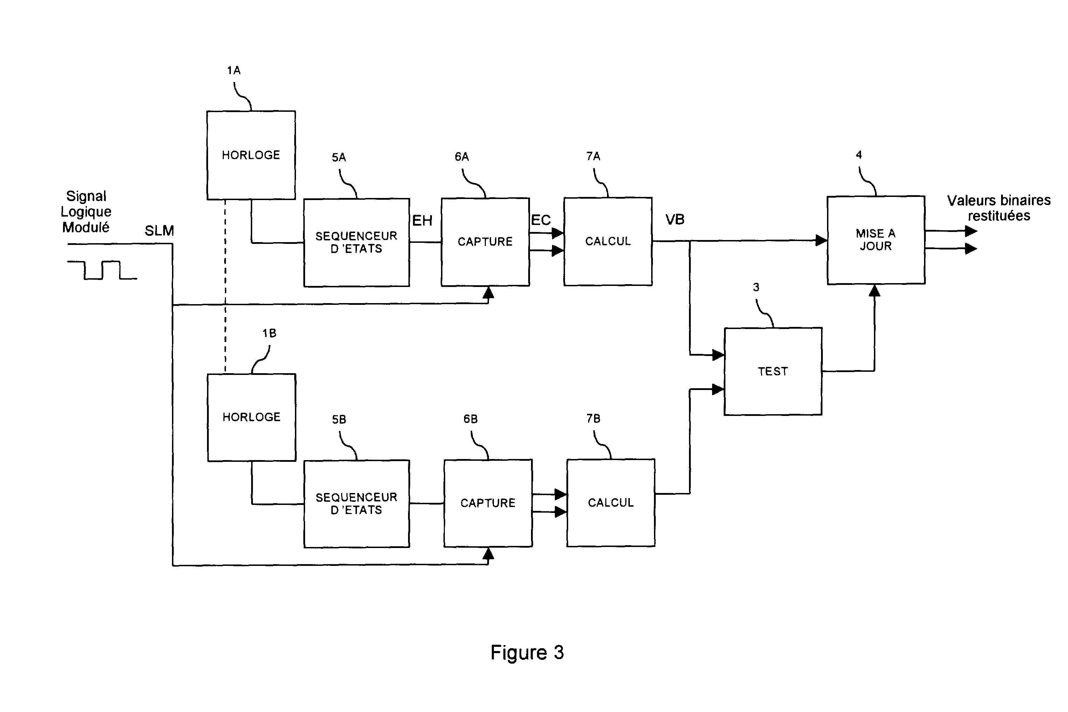

En référence à la figure 3, le démodulateur numérique par séquenceurs d'états comporte d'une manière générale :

- des premiers moyens comprenant deux horloges 1A et 1B de demi-période fixe égale à $\Delta T$, déphasées de la durée $\Delta T \div 2$,
- des deuxièmes moyens comprenant deux séquenceurs d'états 5A et 5B aptes à délivrer à l'infini de manière cyclique deux séquences identiques fixes déphasées de la durée $\Delta T \div 2$, chaque séquence étant composée de la même série de n états logiques distincts, chaque état logique ayant une durée fixe de $\Delta T$,
- des troisièmes moyens comprenant :

  un premier circuit 6A de capture, sur chaque front montant et descendant du signal logique modulé, de l'état en cours du premier séquenceur d'états 5A, et de mise en mémoire des deux derniers états capturés,
  un deuxième circuit 6B de capture, sur chaque front montant et descendant du signal logique modulé, de l'état en cours du deuxième séquenceur d'états 5B, et de mise en mémoire des deux derniers états capturés,

- des quatrièmes moyens comprenant :

  un premier circuit 7A de calcul modulo n, à chaque nouvelle capture, de l'écart en nombre d'états entre les positions respectives dans la séquence de n états du dernier état du premier séquenceur 5A capturé et de l'avant dernier état du premier séquenceur 5A capturé,
  un deuxième circuit 7B de calcul modulo n, à chaque nouvelle capture, de l'écart en nombre d'états entre les positions respectives dans la séquence de n états du dernier état du deuxième séquenceur 5B capturé et de l'avant dernier état du deuxième séquenceur 5B capturé,

- des cinquièmes moyens comprenant un circuit 3 de test d'égalité des valeurs calculées par les circuits 7A et 7B,
- des sixièmes moyens 4 de mise à jour, à la réception de chaque front montant ou descendant du signal logique modulé, des signaux de sortie à une des valeurs calculées par les circuits 7A ou 7B lorsque le circuit 3 a déterminé que ces deux dites valeurs sont égales, et de maintien des signaux de sortie à la même valeur jusqu'à la prochaine mise à jour.

Le fonctionnement du dispositif de démodulation par séquenceurs d'états de la figure 3 est le suivant :

Les deux circuits 1A et 1B sont aptes à délivrer deux signaux logiques périodiques de demi période fixe égale à $\Delta T$ et déphasés l'un par rapport à l'autre de la durée $\Delta T \div 2$.

Les sorties des circuits 1A et 1B sont connectées aux entrées respectives des séquenceurs d'états 5A et 5B qui délivrent à leurs sorties à l'infini de manière cyclique deux séquences identiques fixes déphasées de la durée $\Delta T \div 2$, chaque séquence étant composée de la même série de n états logiques distincts, chaque état logique ayant une durée fixe de $\Delta T$.

A chaque réception d'un front montant ou descendant du signal logique modulé, les opérations suivantes sont successivement réalisées :

- les circuits de capture 6A et 6B capturent les états respectifs des séquenceurs d'états 5A et 5B, en gardant en mémoire les états respectifs des séquenceurs d'états 5A et 5B capturés à la réception du front montant ou descendant précédent du signal logique modulé,
- d'une part, le circuit 7A calcule modulo n l'écart en nombre d'états entre les positions respectives dans la séquence de n états du dernier état du premier séquenceur 5A capturé sur le front en cours du signal modulé et de l'avant dernier état du premier séquenceur 5A capturé sur le front précédent, d'autre part, le circuit 7B calcule modulo n l'écart en nombre d'états entre les positions respectives dans la séquence de n états du dernier état du deuxième séquenceur 5B capturé sur le front en cours du signal modulé et de l'avant dernier état du deuxième séquenceur 5B capturé sur le front précédent,

- le circuit 3 teste si les écarts calculés par les circuits 7A et 7B sont égaux.

- le circuit 4 met à jour et verrouille jusqu'à la prochaine mise à jour les signaux de sortie à la valeur d'une des deux valeurs calculées par les circuits 7A et 7B si le circuit 3 a déterminé que ces deux dites valeurs sont égales.

Les avantages complémentaires découlant des dispositifs de la figure 3 sont les suivants :

- Le nombre d'états des séquenceurs 5A et 5B ne dépendant que du nombre de fréquences à démoduler et non de la valeur de la fréquence porteuse, le nombre de bascules nécessaire à la réalisation des séquenceurs d'états 5A et 5B est très inférieur aux nombre de bascules nécessaire à la réalisation des circuits de comptage 2A et 2B représentés sur la figure 1. La surface de silicium du circuit intégré résultant sera donc infiniment plus faible et donc le composant sera moins cher à réaliser.

- Le procédé est naturellement adapté à la définition de canaux de transmission de n fréquences consécutives chacun. En effet, on remarque que le même dispositif, fonctionne sans aucun réglage sur chacun des canaux de transmission ainsi définis. Cette qualité simplifie la réalisation de systèmes de transmission offrant le choix du canal de transmission parmi plusieurs canaux possibles ainsi que la réalisation de systèmes de transmission utilisant la transmission par étalement de spectre de fréquences.

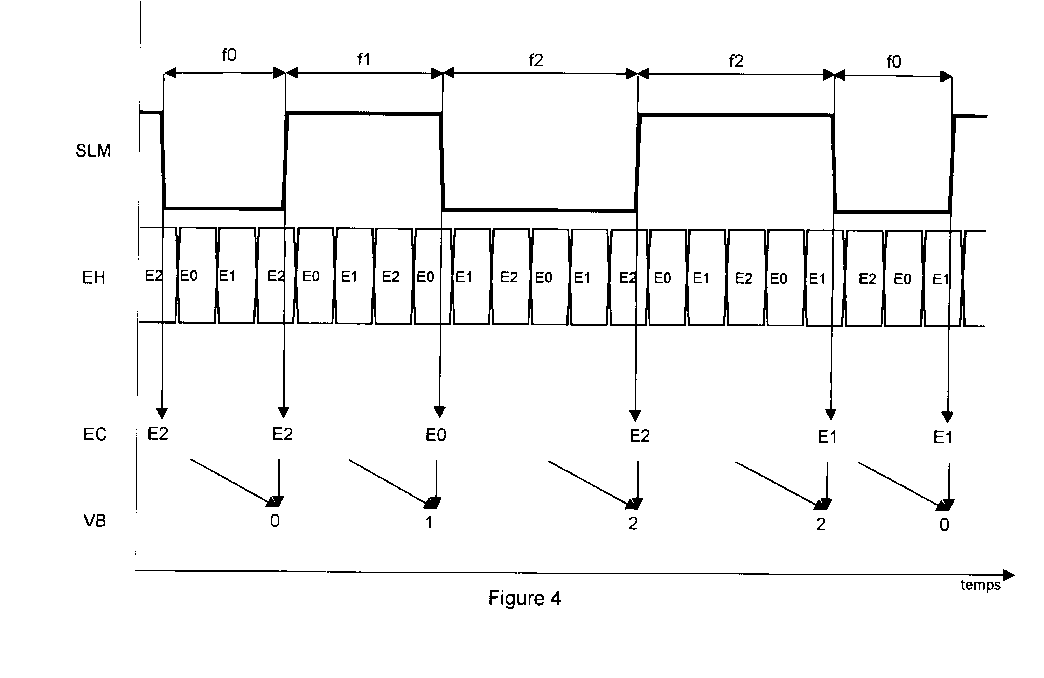

La figure 4 illustre le calcul modulo 3, de l'écart en nombre d'états entre les positions respectives dans la séquence de 3 états $[E_0, E_1, E_2]$ du dernier état du premier séquenceur 5A capturé et de l'avant dernier état du premier séquenceur 5A capturé, par un dispositif réalisé selon l'invention pour n = 3.

Dans cet exemple, on fait entrer dans le dispositif un signal logique de demi périodes successivement égales à ½ $t_0$ , ½ $t_1$, ½ $t_2$ ,  ½$t_2$ et ½ $t_0$ où, ½ $t_0$ = 3×$\Delta$T, ½ $t_1$ = 4×$\Delta$T et ½ $t_2$ = 5×$\Delta$T.

La figure 4 représente un chronogramme des signaux suivants :

- SLM représente le signal logique modulé d'entrée.
- EH représente les états de sortie du séquenceur 5A à trois états $[E_0, E_1, E_2]$.
- EC représente les états du séquenceur 5A capturés sur chaque front du signal logique modulé SLM.

- VB représente le calcul modulo 3 de l'écart en nombre d'états entre les positions respectives dans la séquence de 3 états $[E_0, E_1, E_2]$ du dernier état du premier séquenceur 5A capturé et de l'avant dernier état du premier séquenceur 5A capturé.

Le chronogramme montre en particulier que la valeur VB est égale à k lorsque la demi période du signal entrant est égale à ½ $t_k$.

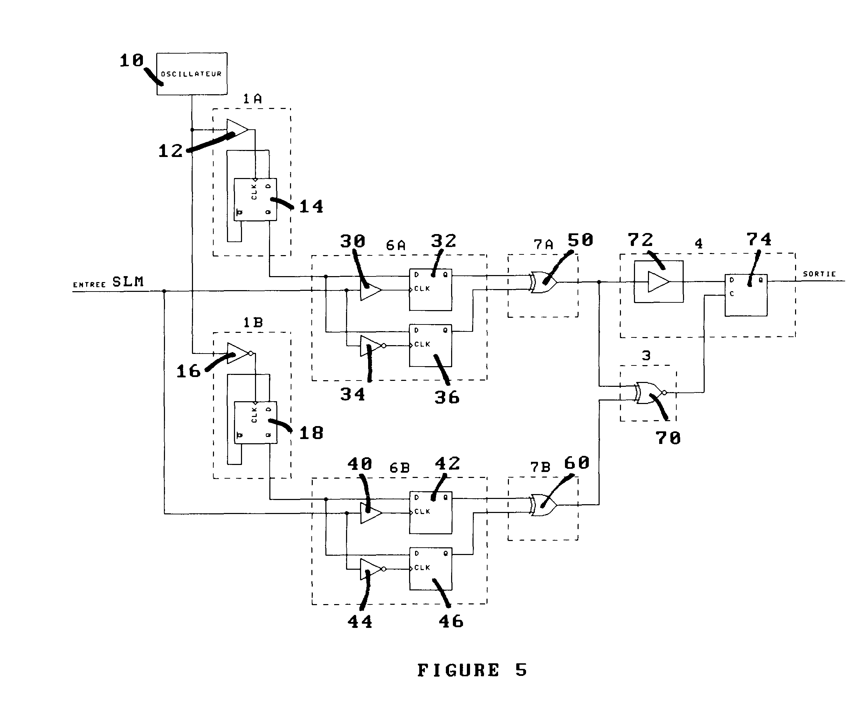

En référence à la figure 5, le démodulateur numérique par séquenceurs d'états est agencé pour démoduler deux fréquences, soit n = 2.

L'horloge 1A est réalisée par un oscillateur 10 à quartz de rapport cyclique 50% de demi période égale à $\Delta$T÷2, dont la sortie est connectée à l'entrée d'une porte neutre 12 suivie d'une bascule D 14.

L'horloge 1B est réalisée par le même oscillateur 10 à quartz de rapport cyclique 50% de demi période égale à $\Delta$T÷2, dont la sortie est connectée à l'entrée d'une porte logique inverseuse 16 suivie d'une bascule D 18.

Les sorties des deux bascules D 14 et 16 délivrent ainsi deux signaux logiques périodiques de demi période fixe égale à $\Delta$T déphasés l'un par rapport à l'autre de la durée $\Delta$T ÷ 2.

On remarque que les sorties des deux horloges délivrent à leurs sorties, à l'infini de manière cyclique, deux séquences de deux états logiques, O et 1, identiques fixes déphasées de la durée $\Delta$T ÷ 2, chaque état logique ayant une durée fixe de $\Delta$T. Ainsi, dans ce cas particulier de démodulateur pour deux fréquences, soit n = 2, les sorties des deux horloges 1A et 1B délivrent sans circuit supplémentaire les sorties des deux séquenceurs à deux états 5A et 5B du dispositif selon l'invention.

Le circuit 6A est réalisé par une porte neutre 30 suivie d'une bascule D 32 formants ainsi une bascule qui change d'état sur front montant, et par une porte logique inverseuse 34 suivie d'une bascule D 36 formants ainsi une bascule qui change d'état sur front descendant. Les entrées des portes 30 et 34 reçoivent le signal logique modulé SLM tandis que les entrées de donnée des bascules D 32 et 36 reçoivent le signal de sortie de l'horloge 1A. Ainsi, la bascule D 32 capture l'état de l'horloge 1A sur chaque front montant du signal modulé et mémorise cet état jusqu'à la réception d'un nouveau front montant de signal modulé et la bascule D 36 capture l'état de l'horloge 1A sur chaque front descendant du signal modulé et mémorise cet état jusqu'à la réception d'un nouveau front descendant de signal modulé. A chaque réception de front montant ou descendant du signal modulé, une des deux bascules D du groupe 32, 36 capture l'état de l'horloge 1A alors que l'autre bascule du groupe 32, 36 garde en mémoire l'état de l'horloge 1A capturé à la réception du front précédent du signal modulé.

Le circuit 6B est réalisé de la même manière que le circuit 6A par une porte neutre 40 de la bascule D 42 et par une porte logique inverseuse 44 suivie d'une bascule D 46. Les entrées des portes 40 et 44 reçoivent le signal logique modulé SLM tandis que les entrées de donnée des bascules D 42 et 46 reçoivent le signal de sortie de l'horloge 1B. Ainsi, à la réception d'un front montant du signal modulé, l'état de l'horloge 1B est capturé par la bascule D 42 alors que l'état de l'horloge 1B capturé à la réception du front descendant précédent du signal modulé est en mémoire dans la bascule D 46. Ainsi, la bascule D 42 capture l'état de l'horloge 1B sur chaque front montant du signal modulé et mémorise cet état jusqu'à la réception d'un nouveau front montant de signal modulé et la bascule D 46 capture l'état de l'horloge 1B sur chaque front descendant du signal modulé et mémorise cet état jusqu'à la réception d'un nouveau front descendant de signal modulé. A chaque réception de front montant ou descendant du signal modulé, une des deux bascules D du groupe 42, 46 capture l'état de l'horloge 1B alors que l'autre bascule du groupe 42, 46 garde en mémoire l'état de l'horloge 1B capturé à la réception du front précédent du signal modulé.

Le circuit 7A de calcul est réalisé par une porte logique 50 OU Exclusif dont les deux entrées sont connectées sur les sorties des bascules D 32 et 36 du circuit 6A de capture. La porte logique 50 OU Exclusif est un circuit soustracteur modulo deux. Ainsi, La sortie de la porte logique 50 OU Exclusif délivre le calcul modulo deux de l'écart des positions respectives dans la séquence de deux états [0, 1] capturés par les bascules D 32 et 36 du circuit 6A, soit, le calcul modulo deux de l'écart des positions respectives dans la séquence de deux états du dernier état de l'horloge 1A capturé sur le dernier front du signal modulé et de l'avant dernier état de l'horloge 1A capturé sur le front précédent du signal modulé.

Le circuit 7B de calcul est réalisé par une porte logique 60 OU Exclusif dont les deux entrées sont connectées sur les sorties des bascules D 42 et 46 du circuit 6B.

Le circuit 3 de test d'égalité des écarts calculés est réalisé par une porte logique 70 NON OU Exclusif dont les deux entrées sont connectées sur les sorties des deux portes logiques 50, 60 OU Exclusif des circuits 7A et 7B. La sortie de la porte logique 70 NON OU Exclusif délivre l'état logique 1 lorsque les états de sortie des deux portes logiques 50, 60 OU Exclusif sont identiques et délivre l'état logique 0 lorsque les états de sortie des deux portes logiques 50, 60 OU Exclusif sont différents.

Le circuit 4 de mise à jour et de maintien des signaux de sortie est réalisé par la série de portes logiques neutres 72 suivie d'un verrou logique 74. L'entrée de verrouillage du verrou 74 reçoit le signal de sortie de la porte logique 70 NON OU Exclusif du circuit 3 de test, tandis que l'entrée de donnée du verrou 74 reçoit le signal de sortie de la porte logique 50 OU Exclusif du circuit 7A de calcul, retardé par la série de portes logiques neutres 72. Ainsi, lorsque les écarts calculés par les circuits 7A et 7B sont égaux, le signal de sortie du circuit 3 de test autorise la mise à jour de la sortie du verrou 74 à l'état du signal de sortie du circuit 7A de calcul. En revanche, lorsque les écarts calculés par les circuits 7A et 7B sont différents, le signal de sortie du circuit 3 de test interdit la mise à jour de la sortie du verrou 74 en verrouillant la sortie du verrou 74 avant que le signal de sortie du circuit 7A de calcul n'arrive sur l'entrée du verrou 74.

Les avantages complémentaires découlant du dispositif de la figure 5 sont les suivants :

- Dans ce cas particulier de démodulateur pour deux fréquences, soit n = 2, les sorties des deux horloges 1A et 1B délivrent sans circuit supplémentaire les sorties des deux séquenceurs à deux états 5A et 5B du dispositif selon l'invention.
- Les circuits 7A et respectivement 7B de soustraction modulo deux sont chacun réduits à une seule porte logique ,50 et respectivement 60, OU Exclusif.
- Le circuit 3 de test d'égalité est réduit à une seule porte logique 3 NON OU Exclusif.
- Il résulte de tous ces avantages une intégration du dispositif en circuit intégré particulièrement simple et économique.

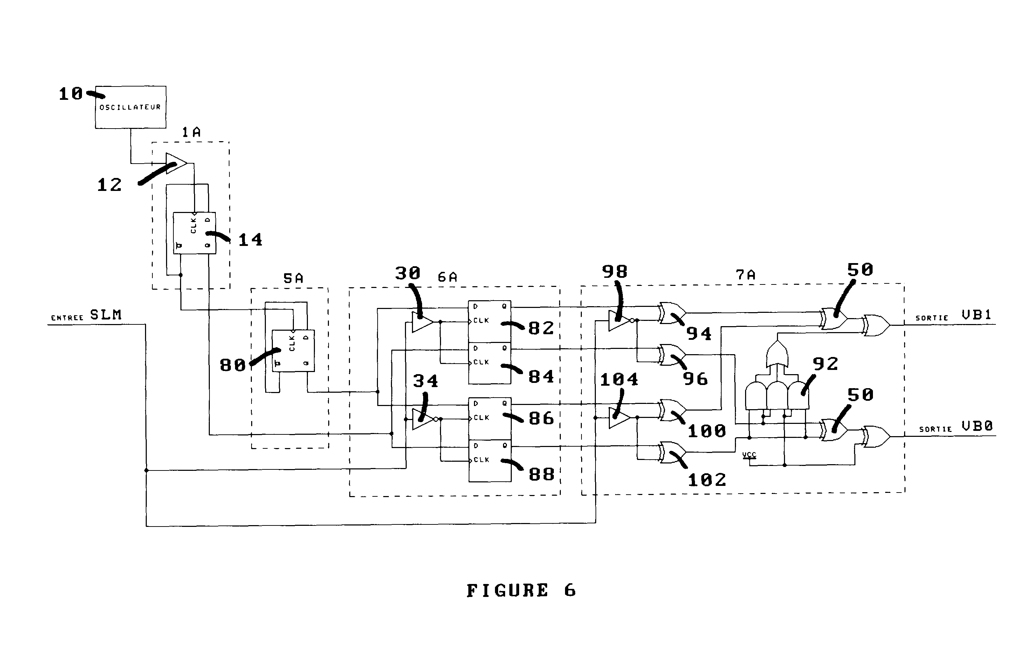

En référence à la figure 6, le démodulateur numérique est agencé pour démoduler quatre fréquences, soit n = 4, par des séquenceurs d'états réalisés à titre d'exemple par des compteurs cycliques.

Le sous-ensemble représenté par la figure 6 est composé d'une horloge 1A, d'un séquenceur d'états 5A, d'un circuit 6A de capture d'état et d'un circuit de calcul 7A de l'écart en nombre d'états entre les positions respectives dans la séquence du dernier état du séquenceur 5A capturé et de l'avant dernier état du séquenceur 5A capturé.

L'horloge 1A est réalisée par un oscillateur 10 à quartz de rapport cyclique 50% de demi période égale à $\Delta T \div 2$, dont la sortie est connectée à l'entrée de la porte neutre 12 suivie de la bascule D 14.

Le séquenceur d'états 5A à quatre états est réalisé par la bascule D 80 dont l'entrée reçoit le signal de sortie inversé de la bascule D 14 de l'horloge 1A. L'entrée de donnée et la sortie inverseuse de la bascule D 80 étant connectées ensemble, la sortie de la bascule D change d'état à la réception de chaque front montant du signal de sortie inversé de la bascule D 14. Les signaux de sortie des bascules D 80 et 14 prennent alors successivement les états respectifs 0 et 0, 0 et 1, 1 et 0, puis 1 et 1, de manière cyclique à infini. Ainsi, les états du séquenceur 5A sont représentés par une valeur binaire à deux bits dont le bit de poids faible est le signal de sortie de la bascule D 14 et le bit de poids fort est le signal de sortie de la bascule D 80.

Le circuit 6A est réalisé par une porte neutre 30 suivie d'un groupe de deux bascules D 82, 84 formants ainsi un groupe de deux bascules qui changent d'état sur front montant, et par une porte logique inverseuse 34 suivie d'un groupe de deux bascules D 86, 88 formants ainsi un groupe de deux bascules qui changent d'état sur front descendant. Les entrées des portes 30 et 34 reçoivent le signal logique modulé SLM tandis que les entrées de donnée des bascules D 82 et 86 reçoivent le signal de sortie de la bascule D 80 et les entrées de donnée des bascules D 84 et 88 reçoivent le signal de sortie de la bascule D 14. Ainsi, les deux bascules D 82 et 84 capturent respectivement les bits de poids fort et de poids faible de l'état du séquenceur 5A sur chaque front montant du signal modulé et mémorise cet état jusqu'à la réception d'un nouveau front montant de signal modulé. De même, les deux bascules D 86 et 88 capturent respectivement les bits de poids fort et de poids faible de l'état du séquenceur 5A sur chaque front descendant du signal modulé et mémorise cet état jusqu'à la réception d'un nouveau front descendant de signal modulé. A chaque réception de front montant ou descendant du signal modulé, un des deux groupes de bascules D 82,84 ou de bascules D 86,88 capture l'état du séquenceur 5A alors que l'autre groupe garde en mémoire l'état du séquenceur 5A capturé à la réception du front précédent du signal modulé.

La première partie du circuit 7A de calcul comporte deux circuits 50 additionneurs bit à bit plus la retenue, un circuit 92 de calcul de retenue, le tout formant un circuit additionneur de deux variables de deux bits avec retenue. L'opération de soustraction modulo quatre du dernier état capturé par le circuit 6A à l'avant dernier état capturé par le circuit 6A est obtenue en additionnant avec ledit circuit additionneur la valeur du dernier état capturé avec le complément à quatre de la valeur de l'avant dernier état capturé. Le complément à quatre de la valeur de l'avant dernier état capturé est obtenu en inversant bit à bit ladite valeur binaire et en additionnant une retenue de 1 sur le bit de poids faible du circuit additionneur.

L'opération d'inverser bit à bit la valeur binaire de l'avant dernier état capturé par le circuit 6A est réalisée par la deuxième partie du circuit 7A qui est composée de deux groupes 94,96 et 100,102 de deux portes logiques OU Exclusif. Les sorties des deux bascules D 82 et 84 sont connectées sur les premières entrées du groupe 94,96 de portes logiques OU Exclusif, tandis que les deuxièmes entrées du groupe 94,96 de portes logiques OU Exclusif reçoivent l'inverse du signal logique modulé à travers un porte logique inverseuse 98. Les sorties des deux bascules D 86 et 88 sont connectées sur les premières entrées du groupe 100,102 de portes logiques OU Exclusif, tandis que les deuxièmes entrées du groupe 100,102 de portes logiques OU Exclusif reçoivent le signal logique modulé à travers un porte logique neutre 104. Ainsi, à la réception d'un front montant du signal logique modulé, les sorties du groupe 94,96 de bascules D prennent l'état des sorties des deux bascules D 82 et 84 alors que les sorties du groupe 100,102 de bascules D prennent l'état inverse des sorties des deux bascules D 86 et 88. A l'inverse, à la réception d'un front descendant du signal logique modulé, les sorties du groupe 94,96 de bascules D prennent l'état inverse des sorties des deux bascules D 82 et 84 alors que les sorties du groupe 100,102 de bascules D prennent l'état des sorties des deux bascules D 86 et 88. Dans les deux cas, la deuxième partie du circuit 7A inverse bit à bit la valeur binaire de l'avant dernier état du séquenceur 5A capturé.

## Application industrielle

Le procédé de démodulation numérique de l'invention est parfaitement approprié à la réalisation des appareils utilisant la transmission numérique par radiofréquences, utilisant la transmission numérique sur câble coaxial ou sur paires torsadées, ou encore utilisant la transmission numérique par courants porteurs sur le secteur électrique.

## Revendications

1. Procédé de démodulation de fréquence numérique, caractérisé en ce qu'il utilise deux horloges (1A, 1B) identiques, de demi périodes de durée $\Delta T$, déphasées de la durée $\Delta T \div 2$ pour restituer des valeurs binaires auxquelles sont associées des fréquences de demi périodes proches de multiples distincts de la même durée $\Delta T$, et par les différentes étapes successives suivantes :

   - Compter, à la réception de chaque front montant ou descendant du signal logique modulé :

     un premier nombre de fois où la première horloge (1A) a changé d'état entre la réception des deux derniers fronts du signal logique modulé,
     un deuxième nombre de fois où la deuxième horloge (1B) a changé d'état entre la réception des deux derniers fronts du signal logique modulé,

   - Mettre à jour les signaux de sortie à la valeur dudit premier ou dudit deuxième nombre lorsque ces deux nombres sont égaux.
   - et à maintenir les signaux de sortie à la même valeur jusqu'à la prochaine mise à jour.

2. Procédé de démodulation de fréquence numérique selon la revendication 1, caractérisé en ce que les n fréquences associées aux n valeurs binaires que prend le signal numérique ont leurs demi périodes proches de multiples consécutifs d'une même durée $\Delta T$,

et en ce que la première étape devienne :

- Compter modulo n, à la réception de chaque front montant ou descendant du signal logique modulé :

   un premier nombre de fois où la première horloge (1A) a changé d'état entre la réception des deux derniers fronts du signal logique modulé,
   un deuxième nombre de fois où la deuxième horloge (1B) a changé d'état entre la réception des deux derniers fronts du signal logique modulé,

**3.** Procédé de démodulation de fréquence numérique selon la revendication 2, caractérisé en ce qu'il utilise les deux horloges identiques, de demi périodes $\Delta T$ et déphasées de la durée $\Delta T \div 2$ pour cadencer deux séquenceurs d'états qui reproduisent à l'infini de manière cyclique deux séquences identiques fixes déphasées de la durée $\Delta T \div 2$, chaque séquence étant composée de la même série de n états logiques distincts, chaque état logique ayant une durée fixe de $\Delta T$, et par les différentes étapes successives suivantes :

- capturer sur chaque front montant et descendant du signal logique modulé,

   l'état en cours du premier séquenceur d'état,
   l'état en cours du deuxième séquenceur d'état,

- calculer modulo n à chaque nouvelle capture :

   un premier écart en nombre d'états entre les positions respectives dans la séquence de n états du dernier état du premier séquenceur capturé et de l'avant dernier état du premier séquenceur capturé,
   et un deuxième écart en nombre d'états entre les positions respectives dans la séquence de n états du dernier état du deuxième séquenceur capturé et de l'avant dernier état du deuxième séquenceur capturé.

- Mettre à jour les signaux de sortie à la valeur du premier ou du deuxième écart lorsque les deux écarts sont égaux.
- et à maintenir les signaux de sortie à la même valeur jusqu'à la prochaine mise à jour.

**4.** Procédé de démodulation de fréquence numérique selon l'une quelconque des revendications 2 à 3, caractérisé en ce que le calcul de l'écart en nombre d'états entre les positions respectives dans la séquence de deux états quelconques du séquenceur revient alors à une simple opération de soustraction des valeurs d'états modulo n, si le dudit séquenceur est constitué par un compteur cyclique.

**5.** Démodulateur numérique faisant usage du procédé selon la revendication 1, caractérisé en ce qu'il comporte :

- deux horloges (1A, 1B) de demi période fixe égale à $\Delta T$, déphasées de la durée $\Delta T \div 2$,
- des moyens (2A, 2B) de compter, à réception de chaque front montant ou descendant du signal logique modulé :

   un premier nombre de fois où la première horloge (1A) a changé d'état entre la réception des deux derniers fronts du signal logique modulé,
   un deuxième nombre de fois où la deuxième horloge (1B) a changé d'état entre la réception des deux derniers fronts du signal logique modulé,

- des moyens (3) de test d'égalité desdits nombres comptés,
- et des moyens (4) de mise à jour, à la réception de chaque front montant ou descendant du signal logique modulé, des signaux de sortie à la valeur dudit premier ou dudit deuxième nombre lorsque ces deux nombres sont égaux, et de maintien des signaux de sortie à la même valeur jusqu'à la prochaine mise à jour.

**6.** Démodulateur numérique selon la revendication 5, caractérisé en ce que :

- les moyens (2A, 2B) de compter, à réception de chaque front montant ou descendant du signal logique modulé :

   un premier nombre de fois où la première horloge (1A) a changé d'état entre la réception des deux derniers fronts du signal logique modulé,
   un deuxième nombre de fois où la deuxième horloge (1B) a changé d'état entre la réception des deux derniers fronts du signal logique modulé,

   comportent deux horloges (1A et 1B) respectivement connectées à deux compteurs (22 et 24), les valeurs desdits compteurs (22 et 24) étant lues par un microprocesseur (20) puis réinitialisée à chaque réception d'un front montant ou descendant du signal logique modulé,
- et les opérations de test des valeurs comptées, et de mise à jour et de maintien des signaux de sortie sont exécutées par logiciel dans le microprocesseur (20).

**7.** Démodulateur numérique faisant usage du procédé selon la revendication 2, caractérisé en ce qu'il comporte :

- deux horloges (1A, 1B) de demi période fixe égale à ∆T, déphasées de la durée ∆T ÷ 2,
- des moyens de compter modulo n, à réception de chaque front montant ou descendant du signal logique modulé :

    un premier nombre de fois où la première horloge (1A) a changé d'état entre la réception des deux derniers fronts du signal logique modulé,
    un deuxième nombre de fois où la deuxième horloge (1B) a changé d'état entre la réception des deux derniers fronts du signal logique modulé,

- des moyens (3) de test d'égalité desdits nombres comptés,
- et des moyens (4) de mise à jour, à la réception de chaque front montant ou descendant du signal logique modulé, des signaux de sortie à la valeur dudit premier ou dudit deuxième nombre lorsque ces deux nombres sont égaux, et de maintien des signaux de sortie à la même valeur jusqu'à la prochaine mise à jour.

**8.** Démodulateur numérique faisant usage du procédé selon la revendication 3, caractérisé en ce qu'il comporte :

- deux horloges (1A, 1B) de demi période fixe égale à ∆T, déphasées de la durée ∆T ÷ 2,
- deux séquenceurs d'états (5A, 5B) qui reproduisent à l'infini de manière cyclique deux séquences identiques fixes déphasées de la durée ∆T ÷ 2, chaque séquence étant composée de la même série de n états logiques distincts, chaque état logique ayant une durée fixe de ∆T,
- des moyens (6A) de capture, sur chaque front montant et descendant du signal logique modulé, de l'état en cours du premier séquenceur d'états (5A), et de mise en mémoire des deux derniers états capturés,
- des moyens (6B) de capture, sur chaque front montant et descendant du signal logique modulé, de l'état en cours du deuxième séquenceur d'états (5B), et de mise en mémoire des deux derniers états capturés,
- des moyens (7A) de calcul modulo n, à chaque nouvelle capture, de l'écart en nombre d'états entre les positions respectives dans la séquence de n états du dernier état du premier séquenceur (5A) capturé et de l'avant dernier état du premier séquenceur (5A) capturé,
- des moyens (7B) de calcul modulo n, à chaque nouvelle capture, de l'écart en nombre d'états entre les positions respectives dans la séquence de n états du dernier état du deuxième séquenceur (5B) capturé et de l'avant dernier état du deuxième séquenceur (5B) capturé,
- des moyens (3) de test d'égalité desdits nombres comptés,
- et des moyens (4) de mise à jour, à la réception de chaque front montant ou descendant du signal logique modulé, des signaux de sortie à la valeur dudit premier ou dudit deuxième nombre lorsque ces deux nombres sont égaux, et de maintien des signaux de sortie à la même valeur jusqu'à la prochaine mise à jour.

**9.** Démodulateur numérique selon l'une quelconque des revendications 5 à 8, caractérisé en ce que les horloges (1A, 1B) comportent un oscillateur (10) dont le signal de sortie est connecté sur une première bascule (14) et dont le signal de sortie inversé dudit oscillateur (10) est connecté sur une deuxième bascule (18), les sorties des deux bascules (14, 18) délivrant ainsi deux signaux logiques périodiques de demi période fixe égale à ∆T déphasés l'un par rapport à l'autre de la durée ∆T ÷ 2.

**10.** Démodulateur numérique selon les revendications 8 ou 9, caractérisé en ce que le séquenceur d'états (5A) comporte au moins une bascule (80) associée à une horloge (1A) pour former un premier compteur cyclique à n états, et en ce que le séquenceur d'états (5B) comporte au moins une bascule associée à une horloge (1B) pour former un deuxième compteur cyclique à n états.

**11.** Démodulateur numérique selon l'une quelconque des revendications 8 à 10, caractérisé en ce que les moyens (6A, 6B) de capture d'un séquenceur d'état (5A, 5B) comportent une porte neutre (30) associée à un groupe d'au moins une bascule D (32) pour former un premier groupe d'au moins une bascule qui change d'état sur front montant, et une porte logique inverseuse (34) associée à un groupe d'au moins une bascule D (36) pour former un deuxième groupe d'au moins une bascule qui change d'état sur front descendant, les deux groupes de bascules ainsi formés recevant sur leurs entrées d'horloge le signal logique modulé et sur leurs entrées de donnée les signaux du séquenceur d'états.

**12.** Démodulateur numérique selon l'une quelconque des revendications 8 à 11, caractérisé en ce que les moyens (3A, 3B) de calcul modulo n de l'écart en nombre d'états entre les positions dans la séquence de n états de deux états capturés comportent au moins un circuit soustracteur (50).

**13.** Démodulateur numérique selon l'une quelconque des revendications 8 à 12, caractérisé en ce que les moyens (3) de test d'égalité des écarts calculés comporte un groupe d'au moins une porte logique (70) NON OU Exclusif, les premières entrées de chaque porte logique dudit groupe étant connectées aux sorties du premier circuit (7A) de calcul et les deuxièmes entrées de chaque porte logique dudit groupe étant connectées aux sorties du deuxième circuit (7B) de calcul.

**14.** Démodulateur numérique selon l'une quelconque des revendications 8 à 13, caractérisé en ce que les moyens (4) de mise à jour et de maintien des signaux de sortie comporte un groupe d'au moins un verrou logique (74) dont les entrées de donnée reçoivent le signal logique modulé retardé par une série de portes logique neutres (72) , et dont les entrées de verrouillage reçoivent le signal de sortie du circuit (3) de test d'égalité des écarts calculés.

Figure 1

FIGURE 2

Figure 3

Figure 4

FIGURE 5

FIGURE 6

**Office européen des brevets**

## RAPPORT DE RECHERCHE EUROPEENNE

Numéro de la demande

EP 99 41 0121

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | FR 2 679 724 A (ALCATEL RADIOTELEPHONE) 29 janvier 1993 (1993-01-29) * abrégé * * page 6, ligne 4 - page 7, ligne 5; figure 1 * * revendications * | 1-14 | H04L27/12 H04L27/156 |
| A | EP 0 529 986 A (INT CONTROL AUTOMATION FINANCE) 3 mars 1993 (1993-03-03) * page 2, ligne 46 - ligne 50 * * page 4, ligne 16 - ligne 33; figure 2 * | 1-14 | |
| A | DE 35 36 032 A (BBC BROWN BOVERI & CIE) 9 avril 1987 (1987-04-09) * abrégé * * revendications * | 1-14 | |
| D,A | EP 0 762 628 A (SNECMA) 12 mars 1997 (1997-03-12) * abrégé * * colonne 2, ligne 37 - colonne 3, ligne 7 * | 1-14 | DOMAINES TECHNIQUES RECHERCHES (Int.Cl.7) |
| D,A | EP 0 564 426 A (ERICSSON GE MOBILE COMMUNICAT) 6 octobre 1993 (1993-10-06) * revendications * | 1-14 | H04L |
| A | EP 0 709 993 A (IBM) 1 mai 1996 (1996-05-01) * abrégé * * revendications 9,10 * | 1-14 | |
| A | US 5 550 505 A (GAUS JR RICHARD C) 27 août 1996 (1996-08-27) * abrégé * | 1-14 | |

Le présent rapport a été établi pour toutes les revendications

| Lieu de la recherche | Date d'achèvement de la recherche | Examinateur |
|---|---|---|
| LA HAYE | 22 décembre 1999 | Koukourlis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 41 0121

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

22-12-1999

| Document brevet cité au rapport de recherche | | Date de publication | Membre(s) de la famille de brevet(s) | | Date de publication |
|---|---|---|---|---|---|
| FR 2679724 | A | 29-01-1993 | EP | 0524590 A | 27-01-1993 |
| EP 0529986 | A | 03-03-1993 | US | 5311556 A | 10-05-1994 |
| | | | AU | 653053 B | 15-09-1994 |
| | | | AU | 2139992 A | 04-03-1993 |
| | | | AU | 669815 B | 20-06-1996 |
| | | | AU | 7025794 A | 13-10-1994 |
| | | | CA | 2077227 A,C | 01-03-1993 |
| | | | JP | 5284181 A | 29-10-1993 |
| | | | MX | 9204989 A | 01-04-1993 |
| | | | US | 5365548 A | 15-11-1994 |
| DE 3536032 | A | 09-04-1987 | AUCUN | | |
| EP 0762628 | A | 12-03-1997 | FR | 2738423 A | 07-03-1997 |
| | | | JP | 9153742 A | 10-06-1997 |
| | | | US | 5818881 A | 06-10-1998 |
| EP 0564426 | A | 06-10-1993 | SE | 470077 B | 01-11-1993 |
| | | | AU | 3560193 A | 07-10-1993 |
| | | | DE | 69318753 D | 02-07-1998 |
| | | | DE | 69318753 T | 03-12-1998 |
| | | | FI | 931431 A | 01-10-1993 |
| | | | JP | 6021984 A | 28-01-1994 |
| | | | SE | 9200990 A | 01-10-1993 |
| | | | US | 5323104 A | 21-06-1994 |
| EP 0709993 | A | 01-05-1996 | US | 5875212 A | 23-02-1999 |
| | | | JP | 8237326 A | 13-09-1996 |
| US 5550505 | A | 27-08-1996 | AUCUN | | |

EPO FORM P0460

Pour tout renseignement concernant cette annexe : voir Journal Officiel de l'Office européen des brevets, No.12/82